# EUROPEAN PATENT SPECIFICATION

(11) **EP 1 382 245 B1**
(45) Date of publication and mention of the grant of the patent: **17.10.2007**
(21) Application number: 02720537.6
(22) Date of filing: 19.04.2002
(51) Int. Cl.: A01N 25/08, A01N 43/40

(54) **METHOD OF PREVENTING CONSOLIDATION OF AGRICULTURAL CHEMICAL ACTIVE INGREDIENT**
VERFAHREN ZUR VERHINDERUNG DES KOMPAKTWERDENS VON AGRARCHEMISCHEM WIRKSTOFF
PROCEDE POUR PREVENIR LA CONSOLIDATION D'UN INGREDIENT CHIMIQUE ACTIF AGRICOLE

(30) Priority: 27.04.2001 JP 2001132289
(43) Date of publication of application: 21.01.2004
(73) Proprietor: ISHIHARA SANGYO KAISHA, LTD., Nishi-ku, Osaka 550-0002 (JP)
(72) Inventor: IMANISHI, Yasutaka, Ishihara Sangyo Kaisha, Ltd., Yokkaichi-shi, Mie 510-0842 (JP); KIMURA, Shinichi, c/o Ishihara Sangyo Kaisha, Ltd., Yokkaichi-shi, Mie 510-0842 (JP); ARAKAWA, Tateki, c/o Ishihara Sangyo Kaisha, Ltd., Yokkaichi-shi, Mie 510-0842 (JP); SHIMURA, Taku, c/o Ishihara Sangyo Kaisha, Ltd., Yokkaichi-shi, Mie 510-0842 (JP)
(74) Representative: Hartz, Nikolai
(86) International application number: PCT/JP2002/003953
(87) International publication number: WO 2002/087325

(56) References cited:
- EP-A- 0 415 688
- WO-A-94/24860
- WO-A-99/43211
- JP-A- 8 277 201
- JP-A- 56 152 401
- JP-A- 62 087 501
- DATABASE WPI Section Ch, Week 198202 Derwent Publications Ltd., London, GB; Class C02, AN 1982-03156E XP002276294 & JP 56 152401 A (ASAHI CHEM IND CO LTD), 26 November 1981 (1981-11-26)
- DATABASE WPI Section Ch, Week 198722 Derwent Publications Ltd., London, GB; Class A97, AN 1987-152440 XP002276295 & JP 62 087501 A (RHONE-POULENC AGROC), 22 April 1987 (1987-04-22)
- DATABASE WPI Section Ch, Week 199525 Derwent Publications Ltd., London, GB; Class C04, AN 1995-190742 XP002276835 & JP 07 109193 A (NISSAN CHEM IND LTD), 25 April 1995 (1995-04-25)
- DATABASE WPI Section Ch, Week 199701 Derwent Publications Ltd., London, GB; Class C03, AN 1997-007430 XP002276297 & JP 08 277201 A (HOKKO CHEM IND CO LTD), 22 October 1996 (1996-10-22)

## Description

### TECHNICAL FIELD

The present invention relates to providing a technique to facilitate handling such as formulation, transportation or storage of an agricultural chemical by preventing caking of an agricultural chemical active ingredient by adding a small amount of an inorganic substance to a powder of the agricultural chemical active ingredient which is solid at room temperature. Accordingly, the present invention relates to an anti-caking method and a precompounded composition.

### BACKGROUND ART

JP 08/277 201 discloses the use of an anti-caking agent in the preparation of a fluazinam containing agrochemical composition. This reference does not relate to the specific anti-caking method according to the present invention.

Granular pesticidal compositions are known from JP 56/152401, JP 07/109193, WO 99/43211, WO 94/24860, and EP 0 415 688. None of these references discloses fluazinam.

Heretofore, for example, 3-chloro-N-(3-chloro-5-trifluoromethyl-2-pyridyl)-α,α,α-trifluoro-2,6-dinitro-p-toluidine (hereinafter referred to as fluazinam) has been used as a fungicidally active ingredient to control pest bacteria living on horticultural or agricultural crop plants, and usually, this fluazinam is formulated together with various agricultural adjuvants into a pesticidal composition such as a wettable powder, an aqueous suspension, a dust or a granule, which is then directly applied or applied after diluted with water. Further, fluazinam is usually thoroughly pulverized to fine particles for the purpose of improving the fungicidal activities or obtaining uniform activities as well mixed with various pesticidal adjuvants. However, in an industrial practical scene, it may frequently happen that fluazinam is stored after the production until the amount suitable for formulation will be accumulated or until the formulation will become possible, or it may be transported to another formulation site.

After the production, fluazinam is likely to cake into a large lump during the storage or transportation. Especially when fluazinam is pulverized after the production or stored for a longer period of time, caking is more likely to take place. For example, if fluazinam is put in a drum container, it cakes, and it becomes difficult to take out from the container. Accordingly, it may be packaged in small portions and put in a container, or after being taken out from the container, the lump is crushed by a hammer. Thus, before it is subjected to formulation in the step of mixing and pulverization with various pesticidal adjuvants, its handling is troublesome.

### DISCLOSURE OF THE INVENTION

The present inventors have found that it is possible to prevent bonding of particles to one another by adding a small amount of a certain substance to fluazinam, thereby to prevent caking and that such a composition will facilitate the subsequent formulation. Namely, the present invention provides an anti-caking method for an agricultural chemical active ingredient, characterized by adding an inorganic substance composed mainly of silica to a powder of an agricultural chemical active ingredient which is solid at room temperature, and a precompounded composition.

Thus, the present invention is characterized by the claims.

### BEST MODE FOR CARRYING OUT THE INVENTION

In the present invention, the inorganic substance is one composed mainly of silica. Specifically, a powder or a granular product of bentonite or white carbon is used. Further, as the inorganic substance, one which is used as a pesticidal adjuvant, is more preferred, since it will not be required to be removed at the time of formulation, since it will not be a hindrance or will not be unnecessary at the time of formulation of an agricultural chemical.

Further, the amount of the inorganic substance to be added, may vary depending upon the type, nature, packaging condition, storage condition, etc., of the agricultural chemical active ingredient. However, it is from 1 to 10 wt%, preferably from 2 to 8 wt%, based on the agricultural chemical active ingredient. If it departs substantially from such a range, caking or an economical disadvantage may result, or such may bring about a hindrance to formulation.

The present inventors have not yet grasped the cause for the caking of the agricultural chemical active ingredient, but it is considered that the storage condition, the composition, nature, etc. of the agricultural chemical active ingredient, etc. are probably related. Especially when the agricultural chemical active ingredient is pulverized, the surface area of particles increases, and the surface activities will increase, whereby particles tend to be more readily bonded to one another, but it is considered that by the addition of the inorganic substance, the surface of particles will be covered by the inorganic substance, whereby caking is prevented.

The agricultural chemical active ingredient may be any one so long as it is solid at room temperature, and it is a powder which has an average particle size of from 1 to 300 µm, preferably from 1 to 100 µm, which is a particle size to be usually incorporated in a pesticidal formulation such as a wettable powder, an aqueous suspension, a dust or a granule. As the agricultural chemical active ingredient, various agricultural chemical active ingredients such as fungicidal, insecticidal, herbicidal and acaricidal ingredients, may be mentioned.

As the fungicidally active ingredient, in addition to fluazinam, the following fungicidally active ingredients may specifically be mentioned.

Cymoxanil, chlorothalonil, thiophanate-methyl, dimethomorph, vinclozolin, iprodione, procymidone, mepronil, flutolanil, kresoxim methyl, azoxystrobin, metominostrobin, pyrimethanil, mepanipyrim may, for example, be mentioned.

As the insecticidally active ingredient, specifically, fenamiphos, EPN, chlorpyrifos methyl, acephate, carbaryl, propoxur, aldicarb, carbofuran, thiodicarb, methomyl, oxamyl, pirimicarb, cartap, thiocyclam, kelthane, tetradifon, fenbutatin oxide, permethrin, cypermethrin, deltamethrin, tefluthrin, ethofenprox, diflubenzuron, chlorfluazuron, teflubenzuron, novaluron, pyridaben, fenpyroximate, fipronil, tebufenpyrad, imidacloprid, nitenpyram, acetamiprid, tebufenozide, methoxyfenozide, buprofezin, hexathiazox, amitraz, triazamate, pymetrozine, pyrimidifen, chlorphenapyr, indoxacarb, acequinocyl, etoxazole, cyromazine may, for example, be mentioned. Further, as the herbicidally active ingredient, specifically, 2,4-D, MCPA, MCPB, naproanilide, dicamba, picloram, clopyralid, benazolin, quinclorac, quinmerac, diflufenzopyr, diuron, linuron, isoproturon, metobenzuron, simazine, atrazine, simetryn, prometryn, dimethametryn, metribuzin, terbuthylazine, cyanazin, ametryn, bromacil, lenacil, propanil, phenmedipham, bromoxynil, ioxynil, bentazone, paraquat, diquat, bifenox, acifluorfen, fomesafen, oxyfluorfen, lactofen, flumioxazin, flumiclorac-pentyl, fluthacet-methyl, oxadiargyl, oxadiazon, sulfentrazone, pentoxazone, azafenidin, pyraflufen-ethyl, flumioxazin, norflurazon, pyrazolate, pyrazoxyfen, benzofenap, fluridone, flurtamone, diflufenican, sulcotrione, mesotrione, isoxaflutole, difenzoquat, methylsulfate, isoxachlortole, diclofop-methyl, haloxyfop, quizalofop-ethyl, fenoxaprop-ethyl, alloxydim sodium salt, tralkoxydim, butroxydim, tepraloxydim, chlorimuron-ethyl, sulfometuron-methyl, primisulfuron-methyl, bensulfuron-methyl, chlorsulfuron, metsulfuron-methyl, cinsulfuron, pyrazosulfuron-ethyl, azimsulfron, flazasulfuron, rimsulfuron, nicosulfuron, imazosulfuron, cyclosulfamuron, prosulfuron, flupyrsulfuron-methyl-sodium, halosulfuron-methyl, thifensulfuron-methyl, ethoxysulfuron, oxasulfuron, flucarbazone sodium salt, flumetsulam, metosulam, diclosulam, cloransulam-methyl, imazapyr, imazethapyr, imazaquin, imazamox, imazametabenzmethyl, pyrithiobac sodium salt, bispyribac-sodium salt, pyriminobac-methyl glyphosate ammonium salt, glyphosate isopropylamine salt, glyphosate ammonium salt, bialaphos, trifluralin, oryzalin, pendimethalin, ethalfluralin, amiprofos-methyl, anilofos, chlorpropham, daimuron, cumyluron, bromobutide, asulam, dithiopyr, thiazopyr, dimepiperate, pyributicarb, alachlor, thenylchlor, propachlor, etobenzanid, mefenacet, cafenstrole, fentrazamide, oxaziclomefone, indanofan, flufenacet may, for example, be mentioned.

To practice the present invention, a common method may be employed for mixing the agricultural chemical active ingredient and the inorganic substance. Both may simply be mixed to accomplish the purpose of the present invention. However, as the case requires, for example, the agricultural chemical active ingredient and the inorganic substance may together be put into a mixing pulverizer and sufficiently mixed and pulverized, or the agricultural chemical active ingredient is thoroughly pulverized, whereupon a powder or granular product of the inorganic substance may be added and mixed therewith.

The mixed product of the agricultural chemical active ingredient and the inorganic substance may then be mixed, pulverized and granulated together with other pesticidal adjuvants such as an anionic or nonionic surfactant, a water-soluble powder, a pH-adjusting agent or an extender such as a defoaming agent, as the case requires, to formulate a pesticidal composition such as a wettable powder, an aqueous suspension, a dust or a granule. According to the present invention, a powder of an agricultural chemical active ingredient which is solid at room temperature, will not undergo caking into a large lump during transportation or storage after the production of the agricultural chemical active ingredient, whereby the agricultural chemical active ingredient can readily be taken out from the container, and a cumbersome step of crushing the lump, or the like is not required. Thus, according to the present invention, the agricultural chemical active ingredient can easily be mixed and pulverized together with various pesticidal adjuvants to accomplish formulation.

Now, Examples of the present invention will be described

### EXAMPLE 1

Fluazinam having the following nature is roughly pulverized by means of a hammer. To 96 wt% of this fluazinam or its pulverized product, 4 wt% of white carbon having the following composition is mixed in a blend mixer for 10 minutes. This mixed product is finely pulverized by a jet mill until an average particle size of from 2.1 to 2.8 µm (SK laser micron sizer) is obtained, to obtain a precompounded composition. This precompounded composition is packed in an amount of 280 kg per one flexible container bag.

### 1) Fluazinam

Fluazinam (not pulverized)
Particle size: not constant, including from a size of a fist to a granular agglomerate.
Fluazinam (pulverized)
Average particle size: 3 to 5 µm.

### 2) White carbon

Tradename: Carplex #80, manufactured by Shionogi & Co., Ltd.
Particle size: at most 45 µm.
Hydrous amorphous silicon dioxide, white fine powder (silicon oxide: 92.0 to 98.0%)

### EXAMPLE 2

A precompounded composition of fluazinam is obtained in the same manner as in Example 1 except that in Example 1, to 95 wt% of fluazinam or its pulverized product, 5 wt% of Bentopharm having the following composition is mixed instead of to 96 wt% of fluazinam or its pulverized product, 4 wt% of white carbon.

### 1) Bentonite

Tradename: Bentopharm (manufactured by Wilfrid Smith Co.)
Miconized powder (bentonite mineral)
Silica: 60 to 70%, alumina: 15 to 20%, magnesium oxide: 10 to 20%
Particle size: at most 75 µm.

### EXAMPLE 3

### Test for measuring anti-caking effects

Into a cylindrical container having a diameter of 3 cm and a height of 3 cm, the precompounded composition of fluazinam obtained in Example 1 or 2 was packed to the upper limit of the opening portion, and a load of 1 kg (0.141 kg/cm²) was exerted thereon for a prescribed time. The sample was taken out and put on the scale, and a load was exerted, whereby when the cake was disintegrated, the numerical value of the load was recorded. The test results (upon expiration of 15 days) are shown in Table 1.

**Table 1**

| | Load at the time of disintegration (g) | |
|---|---|---|
| | Not pulverized | Pulverized |
| Fluazinam | 550 | 3,200 |
| Precompounded composition of Example 1 | 200 | 700 |
| Precompounded composition of Example 2 | 400 | 1,200 |

### INDUSTRIAL APPLICABILITY

According to the present invention, by adding an inorganic substance composed mainly of silica to a powder of an agricultural chemical active ingredient which is solid at room temperature, such as fluazinam, the powder of the agricultural chemical active ingredient can be transported or stored without caking into a large lump, whereby formulation can easily be accomplished.

## Claims

1. An anti-caking method for an agricultural chemical active ingredient containing as a fungicidally active ingredient 3-chloro-N-(3-chloro-5trifluoromethyl-2-pyridyl)-α, α, α,-trifluoro-2,6-dinitro-p-toluidine, which comprises
(i) adding an amount of from 1 to 10 wt% based on the agricultural chemical active ingredient of an inorganic substance selected from a powdery or granular bentonite or white carbon to the agricultural chemical active ingredient which is
- solid at room temperature and
- a powder having an average particle size of from 1 to 300 µm,
(ii) preparing a precompounded composition as a mixed product of the agricultural chemical active ingredient and the inorganic substance.

2. The anti-caking method according to claim 1, wherein the agricultural chemical active ingredient contains 3-chloro-N-(3-chloro-5-trifluoromethyl-2-pyridyl)-α, α, α-trifluoro-2,6-dinitro-p-toluidine and another fungicidally active ingredient.

3. A precompounded composition comprising from 99 to 90 wt% of an agricultural chemical active ingredient which is solid at room temperature, and from 1 to 10 wt% of an inorganic substance, wherein the agricultural chemical active ingredient is a powder having an average particle size of from 1 to 300 µm of a fungicidally active ingredient 3-chloro-N-(3-chloro-5-trifluoromethyl-2-pyridyl)-α, α, α-trifluoro-2,6-dinitro-p-toluidine, and the inorganic substance is a powdery or granular bentonite or white carbon.

## Patentansprüche

1. Verfahren zur Verhinderung des Zusammenbackens eines agrochemischen Wirkstoffs, der als fungizid wirksamen Bestandteil 3-Chlor-N-(3-chlor-5-trifluormethyl-2-pyridyl)-α,α,α-trifluor-2,6-dinitro-p-toluidin enthält, umfassend
(i) Zugeben einer anorganischen Substanz, ausgewählt aus einem pulverförmigen oder granulären Bentonit oder Quarzpulver, zum agrochemischen Wirkstoff in einer Menge von 1 bis 10 Gew.-%, bezogen auf den agrochemischen Wirkstoff, der
- bei Raumtemperatur fest ist, und
- ein Pulver mit einer mittleren Teilchengröße von 1 bis 300 µm ist,
(ii) Herstellen einer precompoundierten Zusammensetzung als gemischtes Produkt des agrochemischen Wirkstoffs und der anorganischen Substanz.

2. Verfahren zur Verhinderung des Zusammenbackens nach Anspruch 1, worin der agrochemische Wirkstoff 3-Chlor-N-(3-chlor-5-trifluormethyl-2-pyridyl)-α,α,α-trifluor-2,6-dinitro-p-toluidin und einen anderen fungiziden Wirkstoff enthält.

3. Precompoundierte Zusammensetzung, umfassend 99 bis 90 Gew.-% eines agrochemischen Wirkstoffs, der bei Raumtemperatur fest ist, und 1 bis 10 Gew.-% einer anorganischen Substanz, worin der agrochemische Wirkstoff ein Pulver mit einer mittleren Teilchengröße von 1 bis 300 µm des fungiziden Wirkstoffs 3-Chlor-N-(3-chlor-5-trifluormethyl-2-pyridyl)-α,α,α-trifluor-2,6-dinitro-p-toluidin ist; und die anorganische Substanz ein pulverförmiger oder granulärer Bentonit oder Quarzpulver ist.

## Revendications

1. Procédé d'antiagglomération pour un ingrédient actif chimique agricole contenant, à titre d'ingrédient actif fongicide, de la 3-chloro-N-(3-chloro-5-trifluorométhyl-2-pyridyl)-α,α,α-trifluoro-2,6-dinitro-p-toluidine, qui comprend :
(i) l'addition d'une quantité de 1 à 10 % en poids, par rapport à l'ingrédient actif chimique agricole, d'une substance inorganique choisie entre un carbone blanc et une bentonite, en poudre ou en granules, à l'ingrédient actif chimique agricole qui est
- solide à la température ambiante et
- une poudre ayant une granulométrie moyenne de 1 à 300 µm,
(ii) la préparation d'une composition pré-combinée, sous la forme d'un produit mélangé de l'ingrédient actif chimique agricole et de la substance inorganique.

2. Procédé d'antiagglomération selon la revendication 1, dans lequel l'ingrédient actif chimique agricole contient de la 3-chloro-N-(3-chloro-5-trifluorométhyl-2-pyridyl)-α,α,α-trifluoro-2,6-dinitro-p-toluidine et un autre ingrédient actif fongicide.

3. Composition pré-combinée comprenant de 99 à 90 % en poids d'un ingrédient actif chimique agricole qui est solide à la température ambiante, et de 1 à 10 % en poids d'une substance inorganique, dans laquelle l'ingrédient actif chimique agricole est une poudre, ayant une granulométrie moyenne de 1 à 300 µm, de l'ingrédient actif fongicide 3-chloro-N-(3-chloro-5-trifluorométhyl-2-pyridyl)-α,α,α-trifluoro-2,6-dinitro-p-toluidine ; et la substance inorganique est un carbone blanc ou une bentonite, en poudre ou en granules.
